# EUROPEAN PATENT APPLICATION

(11) **EP 4 764 833 A1**
(43) Date of publication of application: **24.06.2026**
(21) Application number: 25222390.4
(22) Date of filing: 10.12.2025
(51) Int. Cl.: G06F 8/65, G06F 11/14, G06F 8/71, G06F 11/07, G06F 11/1446

(54) **POLYMORPHIC UPDATES WHEREIN PATCH UPDATES COMPRISE AN INITIAL AND A AN UPDATED BINARY**

(30) Priority: 23.12.2024 US 202419000514
(71) Applicant: Microsoft Technology Licensing, LLC, Redmond, WA 98052 (US)
(72) Inventor: DIACETIS, STEPHEN PAUL, Redmond, Washington, 98052 (US); FARMER, AARON MATTHEW, Redmond, Washington, 98052 (US); MISHRA, ABHINAV, Redmond, Washington, 98052 (US); RATTAN, NAVJOT SINGH, Redmond, Washington, 98052 (US); QURESHI, MALIHA, Redmond, Washington, 98052 (US); DOLLIN, AKIVA CHAIM, Redmond, Washington, 98052 (US); COHEN, JASON L., Redmond, Washington, 98052 (US)
(74) Representative: CMS Cameron McKenna Nabarro Olswang LLP

(57) **Abstract**

Patch updates enable intra-patch reversion from an updated binary to an initial binary in the event of a catastrophic runtime error. This is advantageous in so far as it allows the OS to revert back to a stable configuration with respect to a problematic binary without disabling non-problematic binaries included in the patch update. This in-turn provides an efficient alternative to the conventional approach of wholesale reverting from a patch update to an initial patch update during fault recovery following a catastrophic runtime error (e.g., failure to boot, etc.).

## Description

### BACKGROUND

Software as a service (SaaS) is a cloud computing service model that provides application software via a subscription service, where the service provider remotely manages and maintains the application software via the cloud. In the case of Operating Systems (OSs), different releases of an OS may be provided to a diverse client base with overlapping lifecycles such that each OS release is developed in parallel as new security and/or functional features are introduced. As an example, the service provide may roll out an artificial intelligence (AI) feature across different OS releases. Maintenance of the application software presumes that other software it is built on top of (ex. an app is updated) or software that depends on the application software (ex. the OS is updated) is a particular version.

### SUMMARY

Some examples provide a method for polymorphic updates. In this example, the method includes receiving a single patch update, from a software as a service (SaaS) cloud server, that includes an initial binary and an updated binary for an operating system running on the local computer. The updated binary is an updated version of the initial binary. The method further includes installing the initial binary and the updated binary on the local computer responsive to receiving the single patch update. The operating system is updated to run based on the updated binary. The method further includes monitoring, by a local agent installed on the local computer, an internal signal generated by the operating system while the operating system runs based on the updated binary and reverting, by the local agent, the operating system from the updated binary to the initial binary responsive to the internal signal satisfying a criteria.

Other examples provide a system comprising processor(s) and computer-readable medium storing programming instructions that, when executed by the processor(s), cause the processor(s) to receive a single patch update, from a software as a service (SaaS) cloud server, that includes an initial binary and an updated binary for an operating system running on the local computer. The updated binary is an updated version of the initial binary. The programming instructions further cause the processor(s) to install the initial binary and the updated binary on the local computer responsive to receiving the single patch update. The operating system is updated to run based on the updated binary. The programming instructions further cause the processor(s) to monitor, by a local agent installed on the local computer, an internal signal generated by the operating system while the operating system runs based on the updated binary and to revert, by the local agent, the operating system from the updated binary to the initial binary responsive to the internal signal satisfying a criteria.

Yet other examples provide a computer program product storing programming instructions that, when executed by the processor(s), cause the processor(s) to receive a single patch update, from a software as a service (SaaS) cloud server, that includes an initial binary and an updated binary for an operating system running on a local computer. The updated binary is an updated version of the initial binary. The programming instructions further cause the processor(s) to install the initial binary and the updated binary on the local computer responsive to receiving the single patch update. The operating system is updated to run based on the updated binary. The programming instructions further cause the processor(s) to monitor, by a local agent installed on the local computer, an internal signal generated by the operating system while the operating system runs based on the updated binary and to revert, by the local agent, the operating system from the updated binary to the initial binary responsive to the internal signal satisfying a criteria.

Patch updates enable intra-patch reversion from an updated binary to an initial binary in the event of a catastrophic runtime error. This is advantageous in so far as it allows the OS to revert back to a stable configuration with respect to a problematic binary without disabling non-problematic binaries included in the patch update. This in-turn provides an efficient alternative to the conventional approach of wholesale reverting from a patch update to an initial patch update during fault recovery following a catastrophic runtime error (e.g., failure to boot, etc.).

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

FIG. 1 is a diagram of a SaaS system for maintaining OS via a SaaS cloud;
FIGS. 2A-2C are diagrams of a SaaS system for shipping conventional patch updates to local computers running an OS;
FIGS. 3A-3C are diagrams of a SaaS system for shipping patch updates to local computers running an OS;
FIG. 4 is a diagram of a SaaS system for managing intra-patch binary updates;
FIG. 5 is a diagram of a communications sequence for dynamically rolling out binary updates;
FIG. 6 is a flowchart of a method for intra-patch binary fault recovery;
FIG. 7 is a functional block diagram of a computing apparatus.

Corresponding reference characters indicate corresponding parts throughout the drawings. Any of the figures may be combined into a single example or embodiment.

### DETAILED DESCRIPTION

A more detailed understanding can be obtained from the following description, presented by way of example, in conjunction with the accompanying drawings. The entities, connections, arrangements, and the like that are depicted in, and in connection with the various figures, are presented by way of example and not by way of limitation. As such, any and all statements or other indications as to what a particular figure depicts, what a particular element or entity in a particular figure is or has, and any and all similar statements, that can in isolation and out of context be read as absolute and therefore limiting, can only properly be read as being constructively preceded by a clause such as "In at least some examples, ..." For brevity and clarity of presentation, this implied leading clause is not repeated *ad nauseum.* It should be appreciated that this disclosure may describe inventive aspects and/or features within the context of Microsoft Windows for explanatory purposes so as to provide an example that allows those aspects and/or features to be more easily and clearly understood, and that the inventive aspects and/or features related to those contextual descriptions should not be construed as being limited to Microsoft products or service, and by extension may encompass or otherwise cover product offerings from any service provider. It should be appreciated that while aspects of this disclosure are described within the context of maintaining and updating an SaaS cloud-based operating system, these aspects may also be used to maintain and operate other types of applications, such as an application that operates within an operating system, e.g., an application that includes features and runs sub-processes that are subject to regular updates, etc.

As mentioned above, SaaS computing services may be used to maintain and update Operating Systems (OSs), such as Microsoft Windows. In particular, SaaS cloud server(s) typically update a distributed OS by periodically sending patch updates to the clients' local computers - a process commonly referred to as "shipping" a patch update. When using the conventional approach, a given patch update will generally carry only the current version of a given binary such that each time a binary is updated a new patch must be shipped. Thus, each of the updated binaries carried by a given patch update will typically correspond to a different feature, e.g., an update to an existing feature from the previous patch update or a new feature not provided by the previous patch update. In this sense, each time a patch update is received by a host computer, the set of updated binaries included by the patch update will be installed and replace some or all of the initial binaries included in the previous patch update.

After a patch update is installed, one or more of the updated binaries may trigger or otherwise cause the OS to experience a fault, error, or security vulnerability (collectively referred to as "runtime errors") that impacts OS configuration and requires fault containment to stabilize the OS configuration. As used herein, the term "initial patch update" refers to a patch update that was installed on a local computer prior to receiving a subsequent patch update that that replaces the initial patch update for purposes of updating the OS. Within this context, the subsequent patch update is referred to simply as a "patch update" (present tense). In this way, a "patch update" is installed on a local computer to replace an "initial patch update" for purposes of updating the configuration of an OS running on the local computer. The term "initial patch update" should not be construed as inferring that the underlying patch was included in the initial installation of the OS on the local computer, as an initial patch update may have been shipped to the local computer during a previous patch update iteration (e.g., last month). Non-catastrophic runtime errors may typically be addressed through intra-binary containment, where the binary's code self recovers without having to revert to an earlier binary, as well as through inter-binary containment, which may disable or modify one or more problematic binaries within a patch update while leaving other binaries of the patch update. Conversely, catastrophic runtime errors (e.g., failure to boot, etc.) may require wholesale reverting from the patch update to a previous patch update, which effectively disables updated binaries in the patch update and reverts back to earlier versions of the binary (e.g., initial binaries) in the previous patch.

Aspects of this disclosure ship patch updates that include both an initial binary and an updated binary (which is an updated version of the initial binary). This enables intra-patch reversion from an updated binary to an initial binary in the event of a runtime error, e.g., a catastrophic error, which is advantageous in so far as it allows the OS to revert back to a stable configuration with respect to a problematic binary without disabling non-problematic binaries included in the patch update (as would be the case if the OS reverted from the patch update to an earlier patch update in the conventional manner).

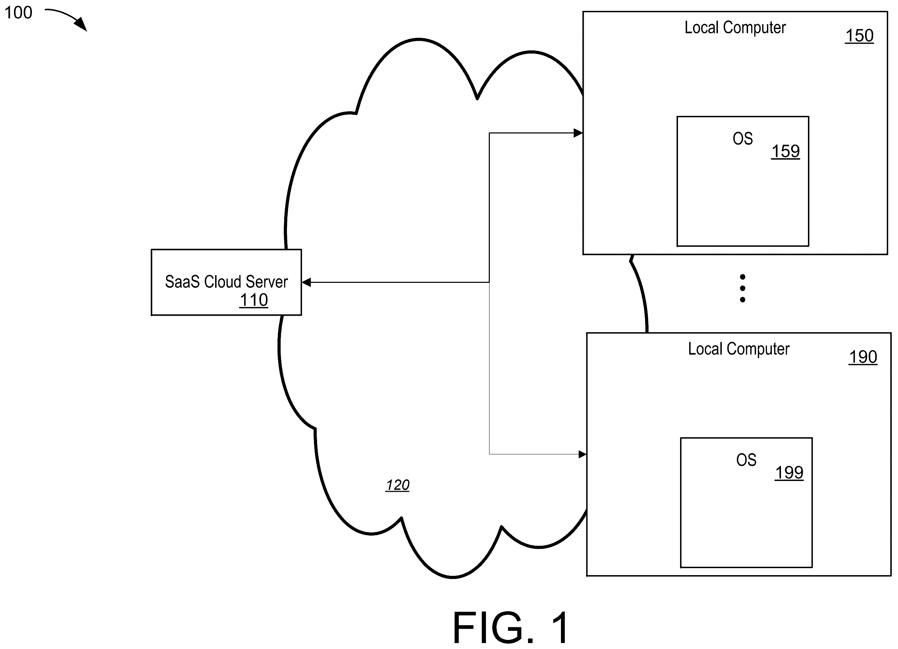

FIG. 1 is a diagram of a SaaS system 100 for maintaining an OS via a SaaS cloud 120. As shown, the SaaS system 100 includes a SaaS cloud server 110 that is interconnected to local computers 150, 190 via the SaaS cloud 120 for the purpose of maintaining and servicing operating systems 159, 199 running on the local computers 150, 190. In doing so, the SaaS cloud server 110 may ship patch updates to the local computers. It should be appreciated that the operating systems 159, 199 may be different revisions of a common OS version or different releases/versions/builds of a common OS generation. Other examples are also possible.

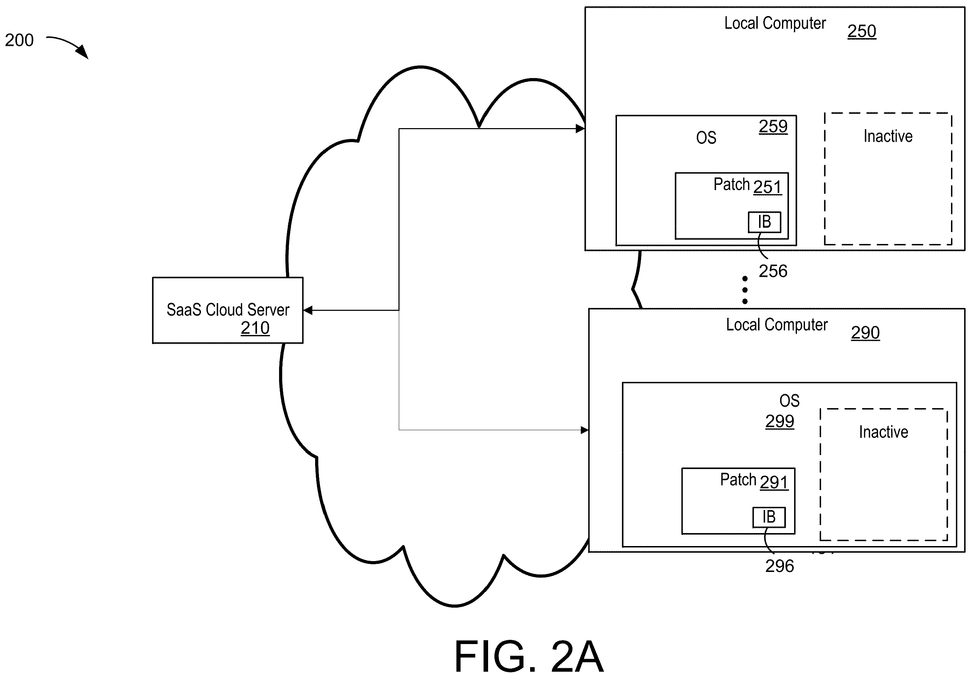

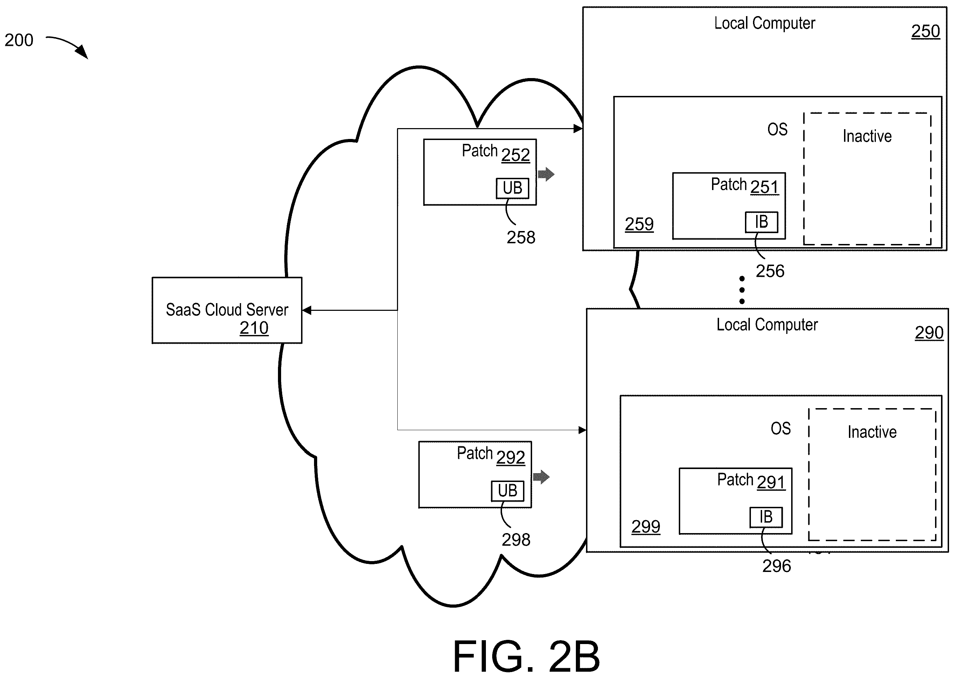

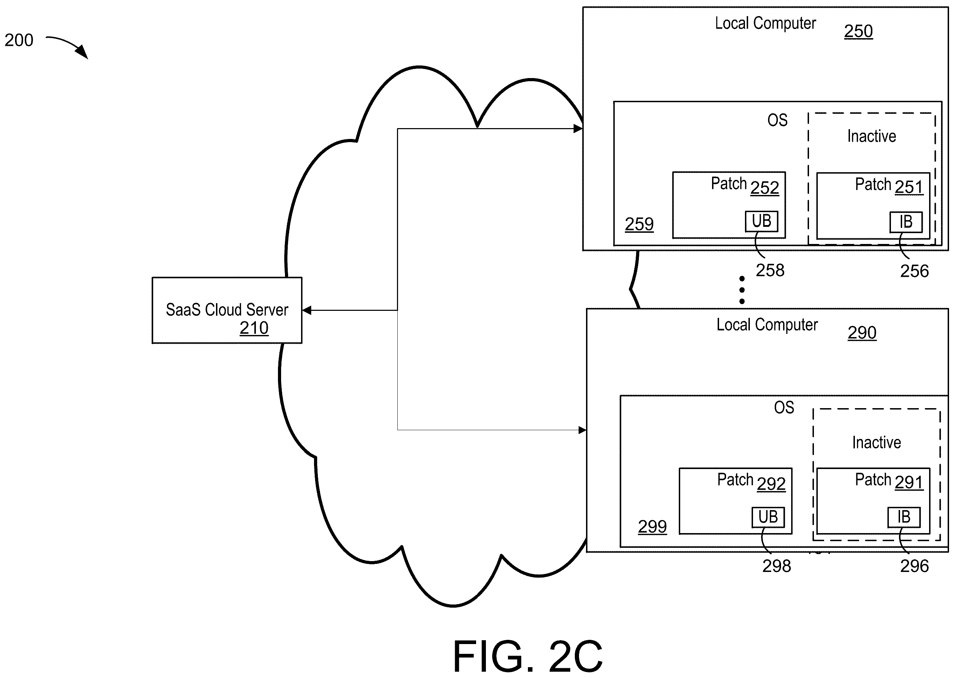

FIGS. 2A-2C are diagrams illustrating a SaaS system 200 for shipping conventional patch updates to local computers 250, 290 running an OS. Similar to the SaaS system 100, the SaaS system 200 includes a SaaS cloud server 210 that communicates with local computers 250, 290 over the internet to maintain and service operating systems 259, 299 running on the local computers 250, 290. It should be appreciated that the operating systems 259, 299 may be different revisions of a common OS version or different releases/versions/builds of a common OS generation. Other examples are also possible. As shown in FIG. 2A, the operating system 259 initially runs based on initial patch update 251, while the operating system 299 initially runs based on initial patch update 291. It should be appreciated that an operating system may classify patch updates as active or inactive. Within the context of the figures, patch updates are classified as active unless they are explicitly depicted (or otherwise described) as being classified as inactive. The initial patch updates 251, 291 include initial binaries (aka an "IBs") 256, 296. As referred to herein, the term "binary" refers to executable code that runs in a contained fashion to enable an operating system to provide features, e.g., security features, functional features, etc. As shown in FIG. 2B, the SaaS cloud server 110 ships patch updates 252, 292 to the local computers 250, 290 for the purpose of updating the operating systems 259, 299 running on the local computers 250, 290. The patch updates 252, 292 include updated binaries (aka "UBs") 258, 298 which represent updated versions of the initial binaries 256, 296. As shown in FIG. 2C, the patch updates 252, 292 are installed on the local computers 250, 290 upon reception. Installing the patch updates 252, 292 on the local computers 250, 290 may generally entail storing the patch updates 252, 292 and classifying the patch updates 252, 292 as active, and reclassifying the initial patch update 251, 291 as inactive. It should be appreciated that classifying a patch update as "active" may include making the hard drive storage location of the patch update available to the operating system during a runtime session of the operating system. Classification/re-classification of a patch update may generally occur during a reboot of the operating system. However, it should be appreciated that, in some cases, "hot patch updates" may be performed by classifying/reclassifying a patch update as active/inactive without rebooting the operating systems 259, 299, e.g., without interrupting runtime operation of the operating systems 259, 299.

The initial patch updates 251, 291 and/or the patch updates 252, 292 may include metadata that provides fault recovery mechanisms for the initial patch updates 251, 291, the patch updates 252, 292, the initial binaries 256, 296, and/or the updated binaries 258, 298.

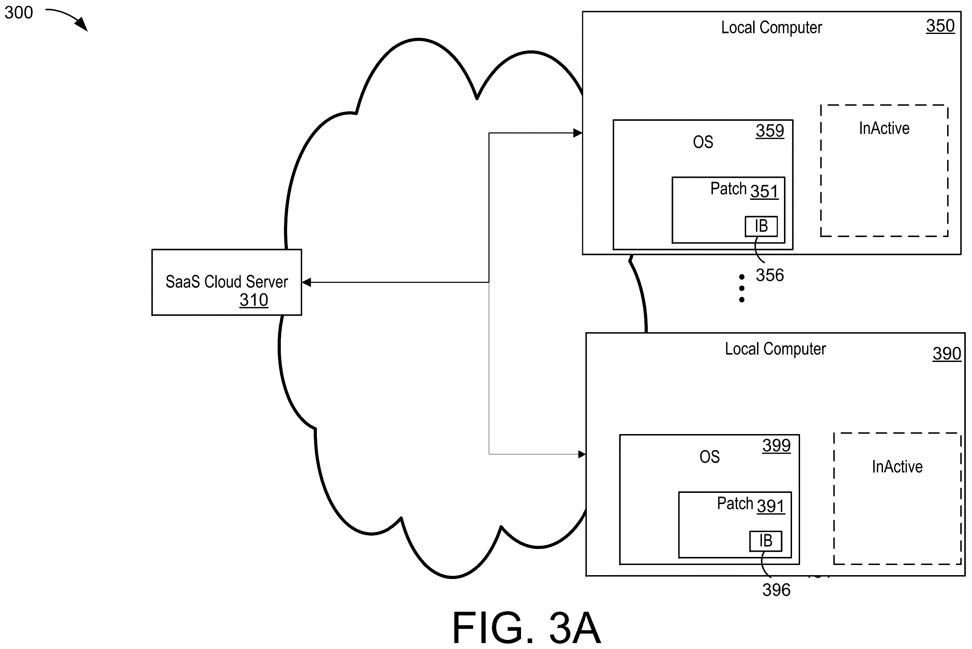

Aspects of this disclosure provide SaaS systems and techniques for shipping patch updates to an OS. FIGS. 3A-3C are diagrams illustrating a SaaS system 300 for shipping patch updates to different revisions of an OS. Similar to the SaaS system 200, the SaaS system 300 includes a SaaS cloud server 310 that communicates with local computers 350, 390 over the internet to maintain and service operating systems 359, 399 running on the local computers 350, 390. However, in contrast to the SaaS system 200, the underlying patch updates 352, 393 include multiple versions of the same binary (e.g., UB, IB, etc). The patch updates 352, 393 may further include updated metadata that allows fault recovery to be updated such that fault recovery can be executed without reverting back to a previous patch. The updated metadata may specify updated "start states" and "end states" for the initial binary and updated binary, with the updated states collectively defining how fault recovery is performed within the patch update (without reverting to the initial patch update for inter-binary containment). Additionally, it is possible to selectively upgrade from an initial binary to an updated binary within the same patch update, therefore allowing for strategic rollout between periodic patch updates. Further, because updated and initial binaries are contained within a common patch, fault recovery mechanisms can revert from an updated binary to an initial binary (e.g., an earlier stable version of the updated binary) without reverting to an entirely new patch. These and other benefits are discussed in greater detail below. It should be appreciated that the operating systems 359, 399 may be different revisions of a common OS version or different releases/versions/builds of a common OS generation. Other examples are also possible.

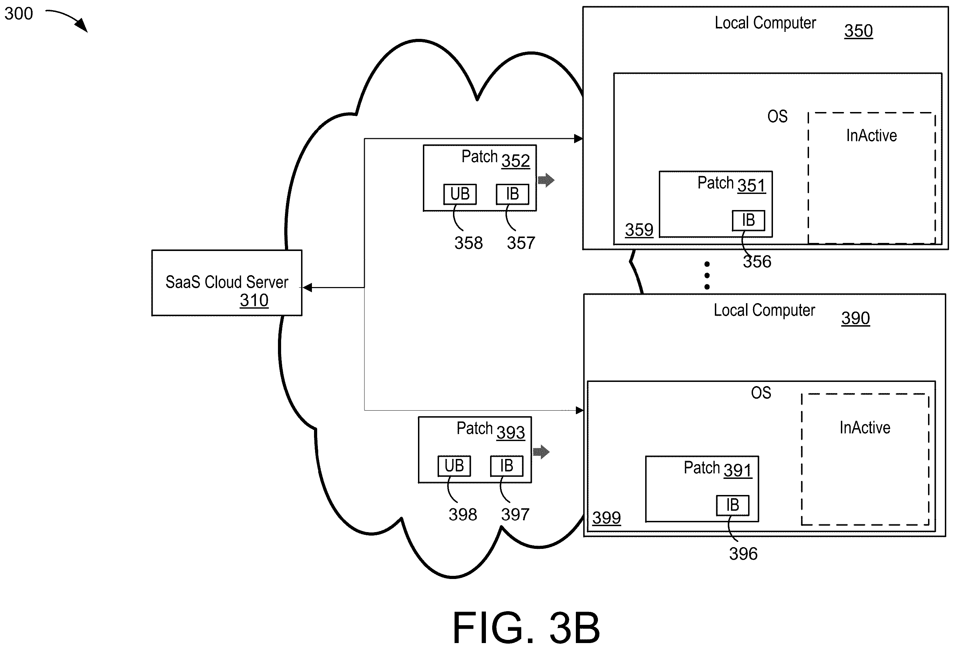

As shown in FIG. 3A, the operating systems 359, 399 initially run based on initial patch updates 351, 391 (respectively). The initial patch updates 351, 391 include initial binaries 356, 396. As shown in FIG. 3B, the SaaS cloud server 110 ships patch updates 352, 392 to the local computers 350, 390 for the purpose of updating the operating systems 359, 399 running on the local computers 350, 390. The patch updates 352, 392 include updated binaries 358, 398 and initial binaries 357, 397. It should be appreciated that the initial binaries 357, 397 in the patch updates 352, 392 may be identical to the initial binaries 356, 396 in the initial patch updates 351, 391. Alternatively, the initial binaries 357, 397 in the patch updates 352, 392 may be a modified version of the initial binaries 356, 396 in the initial patch updates 351, 391, e.g., an intermediate solution that is known to be stable but includes some coding improvements (e.g., debugging) relative to the initial binaries 356, 396.

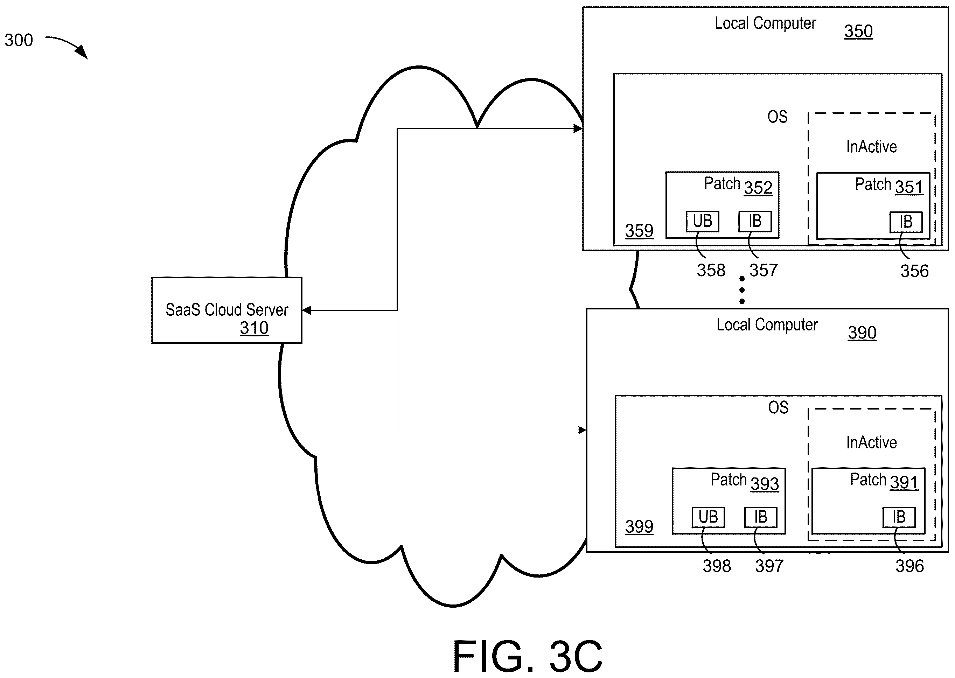

As shown in FIG. 3C, the patch updates 352, 392 are installed on the local computers 350, 390 upon reception. Installing the patch updates 352, 392 on the local computers 350, 390 may generally entail storing the patch updates 352, 392 and classifying the patch updates 352, 392 as active, and reclassifying the initial patch updates 351, 391 as inactive. It should be appreciated that patch updates classified as "active" may reflect data that is projected or otherwise shown in the OS's file system, while patch updates that are classified as inactive may not be projected or otherwise shown in the OS's file system. In some embodiments, the patch updates 352, 392 may include, or otherwise be accompanied by, code for instantiating or otherwise updating Agents 385, 389 installed on the local computers 350, 390. The Agents 385, 389 may be responsible for managing the initial binaries 357, 397 and/or the updated binaries 358, 398 after installation of the patch updates 352, 392 on the local computers 350, 390.

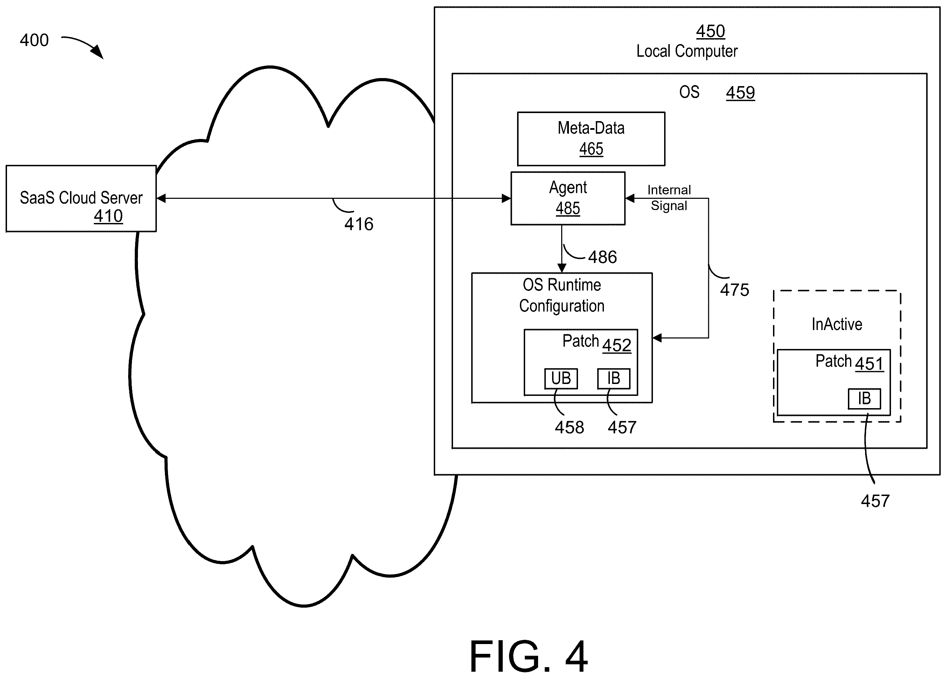

Patch updates enable intra-patch binary recovery in the event of a catastrophic failure. This avoids having to revert back to an earlier patch, which would cause the disablement of all updated binaries provided by the patch update. FIG. 4 is a diagram of a SaaS system 400 for managing intra-patch binary updates. As shown, the SaaS system 400 includes a SaaS cloud server 410 that communicates with a local computer 450 over the internet to maintain and service an operating system 459 running on the local computer. In this example, an Agent 485 is installed on the local computer 450 for purposes of locally managing intra-patch binary updates and fault recovery via a control channel 486. The agents may be patch-specific and a new agent may be classified as active each time a patch update is installed (or otherwise classified as active). In particular, the Agent 485 may perform an intra-patch binary upgrade by disabling the initial binary 457 and enabling the updated binary 458. Intra-patch binary upgrades can be performed during runtime of the operating system without reclassifying the patch update 452 as inactive (or otherwise reverting back to a stable version of a patch update). The agent 485 may also perform intra-patch fault recovery in response to a catastrophic failure associated with the updated binary 458 by disabling the updated binary 458 and enabling the initial binary 457. Intra-patch binary fault recovery can be performed during runtime of the operating system without reclassifying the patch update 452 as active, and without reverting back to the initial patch update 451 (that includes the binary 457), e.g., without reclassifying the initial patch update 451 as active.

The agent 485 may perform an intra-patch binary upgrades and/or intra-patch binary fault recovery based on instructions included in the meta-data 465, an internal signal 475 of the operating system 459, and/or a common control signal 416 from the SaaS cloud server. The internal signal 475 of the operations system 459 may reflect a state of the OS runtime configuration, and may be monitored by the agent 485 to gauge the health and/or performance of the OS runtime configuration of the operating system 459. Internal signals may include locally generated signals of the OS, such as a signal generated to revert in the event of boot failures as well as bootable but unhealth new binary. In one example, the meta-data 465 specifies unilateral instructions for triggering an intra-patch binary upgrade such that the intra-patch binary upgrade is executed by the Agent 485 without prompting from the SaaS cloud server 410. For instance, the meta-data 465 may trigger an intra-patch binary upgrade based on the OS runtime configuration of the operating system 459 satisfying a performance constraint while running in accordance with the initial binary 457, e.g., running for a threshold period of time without experiencing an error condition associated with the initial binary 457. The meta-data 465 may also specify fault recovery conditions for triggering an intra-patch reversion from the updated binary 458 to the initial binary 457.

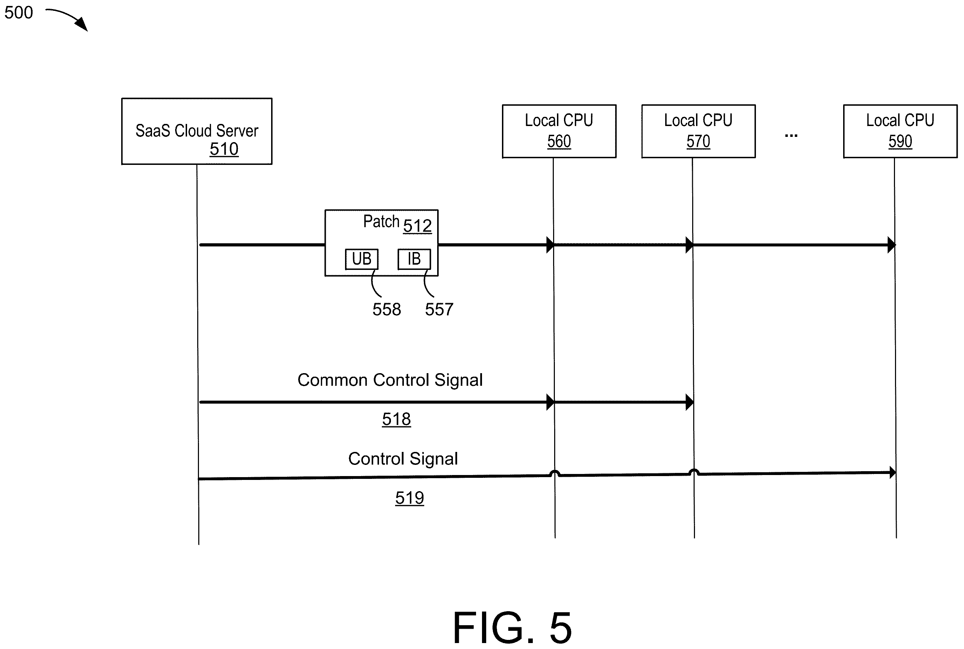

FIG. 5 is a diagram of a communications sequence 500 for dynamically rolling out binary updates. As shown, the SaaS cloud server 510 communicates with local computers 550, 560, 590 to maintain and service operating systems (not shown) running on the local computer local computers 550, 560, 590. The SaaS cloud server 510 ships a single patch update 512 to the local computers 550, 560, 590. The single patch update 512 includes an initial binary 557 and an updated binary 558. In some cases, the single patch update 512 may also carry metadata and/or additional code for instantiating or otherwise installing an agent on the local computers 550, 560, 590. Upon reception, the local computers install the single patch update 512, which results in the initial binary 557 and the updated binary 558 being classified as active. In some cases, metadata carried by, or otherwise accompanying, the single patch update 512 specifies default states for the initial binary 557 and/or the updated binary 558. As an example, the metadata may specify that the initial binary 557 shall be enabled (by default) and that the updated binary 558 shall be disabled (by default), which would result in the initial binary 557 being enabled, and the updated binary 558 being disabled, upon installation of the patch update 512. It should be appreciated that metadata may define different default states for different revisions of an OS. In this example, each of the local computers 550, 560, 590 install the initial binary 557 in in an enabled state and that the updated binary 558 in a disabled state. At some time prior to the next periodic patch update, the SaaS cloud server 510 sends a common control signal 518 to the local computers 560, 570, which triggers an intra-patch binary update such that the agents installed on the local computers 560, 570 disables the initial binary 557 and enables the updated binary 558. Notably, the common control signal is not communicated to the local computer 590 and, as a result, the agent installed on the local computer 590 does not perform an intra-patch binary update at the same time as the agents installed on the local computers 560, 570. Sometime later, the SaaS cloud server sends a control signal 519 to the local computer 590, which triggers an intra-patch binary update such that the agent installed on the local computer 590 disables the initial binary 557 and enables the updated binary 558. Those of ordinary skill in the art will appreciate that this staged rollout capability is particularly beneficial when rolling out new features across an OS distributed amongst a large client base, as it enables the SaaS provider to throttle the velocity of the rollout dynamically in an on-demand fashion (as opposed to waiting for the next periodic patch update ship date).

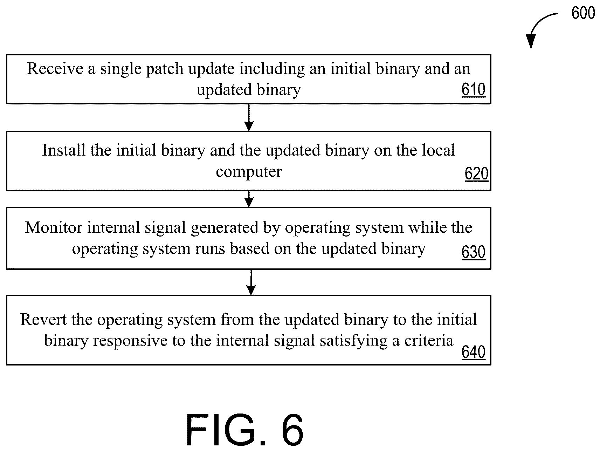

FIG. 6 is a flowchart of a method 600 for intra-patch binary fault recovery, as may be performed by a local computer. The method begins at step 610, where the local computer receives a single patch update, from a SaaS cloud server, that includes an initial binary and an updated binary. The updated binary may be an updated version of the initial binary. At step 620, an operating system, running on the local computer, installs the initial binary and the updated binary on the local computer responsive to receiving the single patch update. The operating system initially runs based on the initial binary before being updated to run based on the updated binary. At step 630, a local agent, installed on the local computer, monitors an internal signal generated by the operating system while the operating system runs based on the updated binary. At step 640, the local agent reverts the operating system from the updated binary to the initial binary responsive to the internal signal satisfying a criteria. The local agent may update the operating system from the initial binary to the updated binary without being prompted to do so by the SaaS cloud server. The local agent may revert the operating system from the initial binary to the updated binary based upon metadata associated with the updated binary. The metadata may be included in the single patch update. The internal signal generated by the operating system is a health signal that indicates a fault/error associated with the updated binary. In one example, the health signal may indicate a catastrophic failure of the operating system, e.g., failure to boot, etc. The updated binary may include a feature that is absent from the initial binary and/or may include an update to a feature that is present in the initial binary. In one example, the local agent may have updated the operating system to run based on the updated binary responsive to receiving a control signal from the SaaS cloud server. In such an example, the control signal that prompts the control agent to update the operating system to run on the updated binary may be separate and distinct from the internal signal generated by the operating system that prompts the Agent to revert the operating system back to the initial binary.

Metadata may include intra-patch update instructions for enabling the updated binary during runtime operation of the respective OS. The metadata may further specify intra-patch containment instructions for reverting an OS from the updated binary to an earlier version of the updated binary (e.g., an IB included in the patch update). In some embodiments, patch updates further include code for installing local agents on the local computers for purposes of managing the enablement and disablement of updated and initial binaries. The local agents may enable/disable binaries according to metadata. It should be appreciated that a patch update is not limited to carrying only two versions of a binary (e.g., an initial binary and an updated binary) and may instead carry three or more versions of a given binary (e.g., binary_v1(IB), binary_v2(UB), ... binary_vn).

Aspects of this disclosure provide patch updates that enable dynamic OS composition by managing different OS package versions. Available package versions can be deployed via a single, shared repository. Composition metadata along with a control signal are used by a local agent to decide which version to apply. The collection of packages (e.g., binaries and metadata) may be published to the SaaS cloud via a single patch update representing a single OS repository, which contains packages for preview features and if required serviced versions of stable features. Preview features (also referred to as "next features") may refer to a new or updated feature provided by a binary in a patch update. The OS may then automatically install updated packages. During installation, OS update metadata describing the preview features may be an input control signal that defines the packages to be installed.

Local agents may monitor internal control signals and/or SaaS control signals (e.g., common control signals from the SaaS cloud server) to determine which binaries to install and when to enable/disable binaries.

Various example scenarios may utilize patch updates, including controlled rollout, binary fault recovery (e.g., intra-patch binary reversion), etc. Controlled rollout may be beneficial in so far as it enables the deployment of long lead features that involve significant code changes, which may be impractical to implement using conventional patch update techniques. Binary fault recovery (aka "reverting a preview feature") may be performed by the local agent, which monitors the health of the most recent continuous delivery update (e.g., most recent patch update) to detect when an updated binary is exhibiting performance issues, in which case an active rollout may be halted in favor of reverting to a stable feature version. It should be appreciated that health can also be monitored remotely via telemetry via the cloud such that adjustments can be made using cloud control signals.

The frameworks provided by this disclosure enable publishing of a single published repository to facilitate a change in behavior (e.g. Preview Feature Adoption, Preview Feature Rollback) based on a single published OS repository. This in-turn allows for a single download by the local computer, such that OSs can be transitioned from an initial binary to an updated binary without reinstalling a preview update or a new update.

Additionally, the framework facilitates patch updates so that multiple generations of new functionality for the same Package(s) can be rolled out. Features may be tracked to enable targeted, dynamic rollouts, as well as multi-generation rollback to previous stable binaries. The framework disclosed herein may support multi-generation rollback by handling complex dependencies across packages and by leveraging new metadata updates via common control signals to revert or promote "stacked" collections of new features. Additionally, frameworks provided by this disclosure facilitate automatic binary recovery based on internal health signals generated by the local OS, which may trigger an Agent to unilaterally revert the OS from an updated binary to an initial stable binary in the event an error condition is detected. The system's ability to automatically heal may allow the OS to achieve a stable configuration in a wide variety of circumstances spanning from basic functional issues to catastrophic failures to boot. Moreover, using heuristics to identify the last known good configuration (e.g., an earlier stable binary) may ensure that the OS is returned to a healthy configuration consistently without the need for SaaS Server intervention. The framework described herein also facilitate the rollout of multiple preview features, including the deployment of independent preview features as well as dependent preview features at the same point in time. Additionally, the framework supports multiple containment models, such as a single logical preview feature developed with a subset of packages using patch updates as well as a subset of logical preview features that use source code level preview feature enablement / disablement. By leveraging a common control signal, the local agent is able to upgrade from an initial binary to an updated binary in-between patch updates, which allows for more effective control of the enablement and/or disablement of multiple features using one or more containment approaches. In some embodiments, patch updates may be implemented using Windows Insiders.

### Exemplary Operating Environment

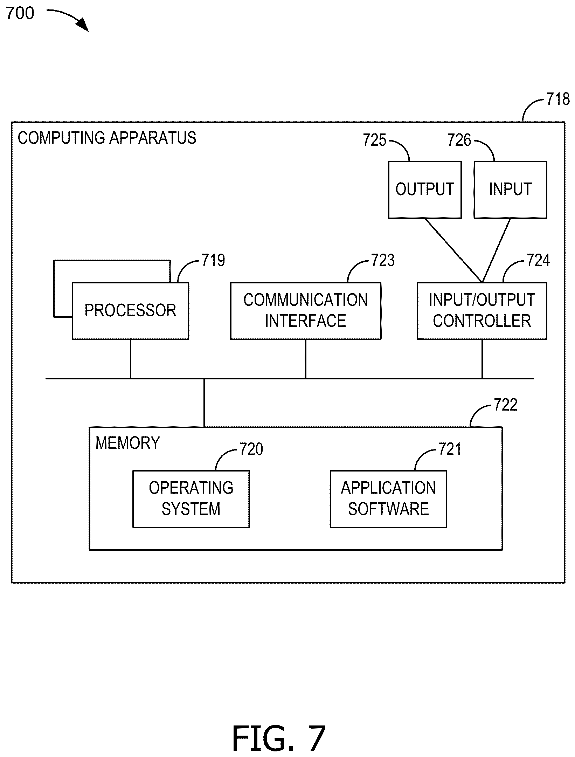

The present disclosure is operable with a computing apparatus according to an embodiment as a functional block diagram 700 in FIG. 7. In an example, components of a computing apparatus 718 are implemented as a part of an electronic device according to one or more embodiments described in this specification.

The computing apparatus 718 comprises one or more processors 719 which can be microprocessors, controllers, or any other suitable type of processors for processing computer executable instructions to control the operation of the electronic device. Alternatively, or in addition, the processor 719 is any technology capable of executing logic or instructions, such as a hardcoded machine. In some examples, platform software comprising an operating system 720 or any other suitable platform software is provided on the apparatus 718 to enable application software 721 to be executed on the device.

In some examples, computer executable instructions are provided using any computer-readable medium or media accessible by the computing apparatus 718. Computer-readable media include, for example, computer storage media such as a memory 722 and communications media. Computer storage media, such as a memory 722, include volatile and non-volatile, removable, and non-removable media implemented in any method or technology for storage of information such as computer readable instructions, data structures, program modules or the like. Computer storage media include, but are not limited to, Random Access Memory (RAM), Read-Only Memory (ROM), Erasable Programmable Read-Only Memory (EPROM), Electrically Erasable Programmable Read-Only Memory (EEPROM), active memory, inactive memory, persistent memory, non-persistent memory, phase change memory, flash memory or other memory technology, Compact Disk Read-Only Memory (CD-ROM), digital versatile disks (DVD) or other optical storage, magnetic cassettes, magnetic tape, magnetic disk storage, shingled disk storage or other magnetic storage devices, or any other non-transmission medium that can be used to store information for access by a computing apparatus. In contrast, communication media may embody computer readable instructions, data structures, program modules, or the like in a modulated data signal, such as a carrier wave, or other transport mechanism. As defined herein, computer storage media do not include communication media. Therefore, a computer storage medium does not include a propagating signal. Propagated signals per se are not examples of computer storage media. Although the computer storage medium (the memory 722) is shown within the computing apparatus 718, it will be appreciated by a person skilled in the art, that, in some examples, the storage is distributed or located remotely and accessed via a network or other communication link (e.g., using a communication interface 723).

Further, in some examples, the computing apparatus 718 comprises an input/output controller 724 configured to output information to one or more output devices 725, for example a display or a speaker, which are separate from or integral to the electronic device. Additionally, or alternatively, the input/output controller 724 is configured to receive and process an input from one or more input devices 726, for example, a keyboard, a microphone, or a touchpad. In one example, the output device 725 also acts as the input device. An example of such a device is a touch sensitive display. The input/output controller 724 in other examples outputs data to devices other than the output device, e.g., a locally connected printing device. In some examples, a user provides input to the input device(s) 726 and/or receives output from the output devices 725.

The functionality described herein can be performed, at least in part, by one or more hardware logic components. The computing apparatus 718 is configured by the program code when executed by the processor 719 to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Program-specific Standard Products (ASSPs), System-on-a-chip systems (SOCs), Complex Programmable Logic Devices (CPLDs), Graphics Processing Units (GPUs).

At least a portion of the functionality of the various elements in the figures may be performed by other elements in the figures, or an entity (e.g., processor, web service, server, application program, computing device, etc.) not shown in the figures.

Although described in connection with an exemplary computing system environment, examples of the disclosure are capable of implementation with numerous other general purpose or special purpose computing system environments, configurations, or devices.

Examples of well-known computing systems, environments, and/or configurations that are suitable for use with aspects of the disclosure include, but are not limited to, mobile or portable computing devices (e.g., smartphones), personal computers, server computers, hand-held (e.g., tablet) or laptop devices, multiprocessor systems, gaming consoles or controllers, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, and the like. In general, the disclosure is operable with any device with processing capability such that it can execute instructions such as those described herein. Such systems or devices accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions, or the specific components or modules illustrated in the figures and described herein. Other examples of the disclosure include different computer-executable instructions or components having more or less functionality than illustrated and described herein.

In examples involving a general-purpose computer, aspects of the disclosure transform the general-purpose computer into a special-purpose computing device when configured to execute the instructions described herein.

Any range or device value given herein may be extended or altered without losing the effect sought, as will be apparent to the skilled person.

While no personally identifiable information is tracked by aspects of the disclosure, examples have been described with reference to data monitored and/or collected from the users. In some examples, notice may be provided to the users of the collection of the data (e.g., via a dialog box or preference setting) and users are given the opportunity to give or deny consent for the monitoring and/or collection. The consent can take the form of opt-in consent or opt-out consent.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The embodiments illustrated and described herein as well as embodiments not specifically described herein but within the scope of aspects of the claims constitute exemplary means for receiving a first search request, the first search request including one or more search terms; identifying one or more product categories as output from a machine learning classification model in response to inputting of the one or more search terms; identifying a first plurality of products that are assigned to the one or more product categories, each product of the first plurality of products including a plurality of product titles and a plurality of product short descriptions in a natural language; applying the plurality of product titles and the plurality of product short descriptions as input to a second machine learning model that is configured to generate a plurality of recommended searches, each recommended search of the plurality of recommended searches including at least one search term; scoring each recommended search of the plurality of recommended searches; selecting one or more recommended searches of the plurality of recommended searches based on the scoring; and causing the one or more recommended searches to be displayed as user-interactable components on a graphical user interface, each user-interactable component being configured to execute a second search request upon user interaction with the user-interactable component.

At least a portion of the functionality of the various elements in FIG. 1 to FIG. 9 can be performed by other elements.

In some examples, the operations described herein can be implemented as software instructions encoded on a computer-readable medium, in hardware programmed or designed to perform the operations, or both. For example, aspects of the disclosure can be implemented as a system on a chip or other circuitry including a plurality of interconnected, electrically conductive elements.

While the aspects of the disclosure have been described in terms of various examples with their associated operations, a person skilled in the art would appreciate that a combination of operations from any number of different examples is also within scope of the aspects of the disclosure.

The term "Wi-Fi" as used herein refers, in some examples, to a wireless local area network using high frequency radio signals for the transmission of data. The term "BLUETOOTH^{®}" as used herein refers, in some examples, to a wireless technology standard for exchanging data over short distances using short wavelength radio transmission. The term "NFC" as used herein refers, in some examples, to a short-range high frequency wireless communication technology for the exchange of data over short distances.

The term "comprising" is used in this specification to mean including the feature(s) or act(s) followed thereafter, without excluding the presence of one or more additional features or acts.

In some examples, the operations illustrated in the figures are implemented as software instructions encoded on a computer readable medium, in hardware programmed or designed to perform the operations, or both. For example, aspects of the disclosure are implemented as a system on a chip or other circuitry including a plurality of interconnected, electrically conductive elements.

The order of execution or performance of the operations in examples of the disclosure illustrated and described herein is not essential, unless otherwise specified. That is, the operations may be performed in any order, unless otherwise specified, and examples of the disclosure may include additional or fewer operations than those disclosed herein. For example, it is contemplated that executing or performing a particular operation before, contemporaneously with, or after another operation is within the scope of aspects of the disclosure.

When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Within the scope of this application, it is expressly intended that the various aspects, embodiments, examples, and alternatives set out in the preceding paragraphs, in the claims and/or in the description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim, accordingly, including the right to amend any originally filed claim to depend from and/or incorporate any feature of any other claim although not originally claimed in that manner.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

Alternatively or in addition to the other examples described herein, examples include any combination of the following clauses:
Clause A. A method comprising: receiving, by a local computer, a single patch update from a software as a service (SaaS) cloud server, the single patch update including at least an initial binary and an updated binary for an operating system running on the local computer, the updated binary being an updated version of the initial binary; installing, by the operating system, the initial binary and the updated binary on the local computer responsive to receiving the single patch update, wherein the operating system is updated to run based on the updated binary; monitoring, by a local agent installed on the local computer, an internal signal generated by the operating system while the operating system runs based on the updated binary; and reverting, by the local agent, the operating system from the updated binary to the initial binary responsive to the internal signal satisfying a criteria.
Clause B. The method of clause A, wherein the local agent reverts the operating system from the initial binary to the updated binary based upon intra-patch containment instructions metadata associated with the updated binary.
Clause C. The method of clause B, wherein the metadata is included in the single patch update.
Clause D. The method of clause B or clause C, wherein the metadata is patch-specific.
Clause E. The method of any of clauses A to D, wherein the internal signal generated by the operating system is a health signal that indicates a catastrophic failure associated with the updated binary.
Clause F. The method of any of clauses A to E, wherein the updated binary includes at least one feature that is absent from the initial binary.
Clause G. The method of any of clauses A to F, wherein the local agent updates the operating system from the initial binary to the updated binary based upon an SaaS control signal received from the SaaS cloud server after the single patch update.
Clause H. A system comprising: processor(s); and computer-readable medium storing programming instructions that, when executed by the processor(s), cause the processor(s) to: receive, by a local computer, a single patch update from a software as a service (SaaS) cloud server, the single patch update including at least an initial binary and an updated binary for an operating system running on the local computer, the updated binary being an updated version of the initial binary; install, by the operating system, the initial binary and the updated binary on the local computer responsive to receiving the single patch update, wherein the operating system is updated to run based on the updated binary; monitor, by a local agent installed on the local computer, an internal signal generated by the operating system while the operating system runs based on the updated binary; and revert, by the local agent, the operating system from the updated binary to the initial binary responsive to the internal signal satisfying a criteria.
Clause I. The system of clause H, wherein the local agent reverts the operating system from the initial binary to the updated binary based upon intra-patch containment instructions metadata associated with the updated binary.
Clause J. The system of clause I, wherein the metadata is included in the single patch update.
Clause K. The system of clause I or clause J, wherein the metadata is patch-specific.
Clause L. The system of any of clauses I to K, wherein the internal signal generated by the operating system is a health signal that indicates a catastrophic failure associated with the updated binary.
Clause M. The system of any of clauses I to L, wherein the updated binary includes at least one feature that is absent from the initial binary.
Clause N. The system of any of clauses I to M, wherein the local agent updates the operating system from the initial binary to the updated binary based upon an SaaS control signal received from the SaaS cloud server after the single patch update.
Clause O. A computer program product storing programming instructions that, when executed by processor(s), cause the processor(s) to: receive, by a local computer, a single patch update from a software as a service (SaaS) cloud server, the single patch update including at least an initial binary and an updated binary for an operating system running on the local computer, the updated binary being an updated version of the initial binary; install, by the operating system, the initial binary and the updated binary on the local computer responsive to receiving the single patch update, wherein the operating system is updated to run based on the updated binary; monitor, by a local agent installed on the local computer, an internal signal generated by the operating system while the operating system runs based on the updated binary; and revert, by the local agent, the operating system from the updated binary to the initial binary responsive to the internal signal satisfying a criteria.
Clause P. The computer program product of clause O, wherein the local agent reverts the operating system from the initial binary to the updated binary based upon metadata associated with the updated binary.
Clause Q. The computer program product of clause P, wherein the metadata is included in the single patch update.
Clause R. The computer program product of clause P or clause Q, wherein the metadata is patch-specific.
Clause S. The computer program product of any of clauses O to R, wherein the internal signal generated by the operating system is a health signal that indicates a catastrophic failure associated with the updated binary.
Clause T. The computer program product of any of clauses O to S, wherein the updated binary includes at least one feature that is absent from the initial binary.

## Claims

1. A method comprising:
receiving, by a local computer (350), a single patch update (352) from a software as a service, SaaS, cloud server (310), the single patch update (352) including at least an initial binary (357) and an updated binary (358) for an operating system (359) running on the local computer (350), the updated binary (358) being an updated version of the initial binary (357);
installing, by the operating system (359), the initial binary (357) and the updated binary (358) on the local computer (350) responsive to receiving the single patch update (352), wherein the operating system (359) is updated to run based on the updated binary (358);
monitoring, by a local agent installed on the local computer (350), an internal signal generated by the operating system (359) while the operating system runs based on the updated binary (358); and
reverting, by the local agent, the operating system (359) from the updated binary (358) to the initial binary (357) responsive to the internal signal satisfying a criteria.

2. The method of claim 1, wherein the local agent reverts the operating system from the initial binary to the updated binary based upon intra-patch containment instructions metadata associated with the updated binary.

3. The method of claim 2, wherein the metadata is included in the single patch update.

4. The method of claim 2 or claim 3, wherein the metadata is patch-specific.

5. The method of any preceding claim, wherein the internal signal generated by the operating system is a health signal that indicates a catastrophic failure associated with the updated binary.

6. The method of any preceding claim, wherein the updated binary includes at least one feature that is absent from the initial binary.

7. The method of any preceding claim, wherein the local agent updates the operating system from the initial binary to the updated binary based upon an SaaS control signal received from the SaaS cloud server after the single patch update.

8. A system comprising:
processor(s); and
computer-readable medium storing programming instructions that, when executed by the processor(s), cause the processor(s) to:
receive, by a local computer, a single patch update from a software as a service, SaaS, cloud server, the single patch update including at least an initial binary and an updated binary for an operating system running on the local computer, the updated binary being an updated version of the initial binary;
install, by the operating system, the initial binary and the updated binary on the local computer responsive to receiving the single patch update, wherein the operating system is updated to run based on the updated binary;
monitor, by a local agent installed on the local computer, an internal signal generated by the operating system while the operating system runs based on the updated binary; and
revert, by the local agent, the operating system from the updated binary to the initial binary responsive to the internal signal satisfying a criteria.

9. The system of claim 8, wherein the local agent reverts the operating system from the initial binary to the updated binary based upon intra-patch containment instructions metadata associated with the updated binary.

10. The system of claim 9, wherein the metadata is included in the single patch update.

11. The system of claim 9 or claim 10, wherein the metadata is patch-specific.

12. The system of any of claims 8 to 11, wherein the internal signal generated by the operating system is a health signal that indicates a catastrophic failure associated with the updated binary.

13. The system of any of claims 8 to 12, wherein the updated binary includes at least one feature that is absent from the initial binary.

14. The system of any of claims 8 to 13, wherein the local agent updates the operating system from the initial binary to the updated binary based upon an SaaS control signal received from the SaaS cloud server after the single patch update.

15. A computer program product storing programming instructions that, when executed by processor(s), cause the processor(s) to:
receive, by a local computer, a single patch update from a software as a service (SaaS) cloud server, the single patch update including at least an initial binary and an updated binary for an operating system running on the local computer, the updated binary being an updated version of the initial binary;
install, by the operating system, the initial binary and the updated binary on the local computer responsive to receiving the single patch update, wherein the operating system is updated to run based on the updated binary;
monitor, by a local agent installed on the local computer, an internal signal generated by the operating system while the operating system runs based on the updated binary; and
revert, by the local agent, the operating system from the updated binary to the initial binary responsive to the internal signal satisfying a criteria.
